# EUROPEAN PATENT APPLICATION

(11) **EP 4 101 767 A1**
(43) Date of publication of application: **14.12.2022**
(21) Application number: 22178288.1
(22) Date of filing: 10.06.2022
(51) Int. Cl.: B64D 15/16, B64D 15/22

(54) **MECHANICAL ICE PROTECTION SYSTEM FOR AERODYNAMIC SURFACES**

(30) Priority: 10.06.2021 US 202117343969
(71) Applicant: Goodrich Corporation, Charlotte, NC 28217-4578 (US)
(72) Inventor: BOTURA, Galdemir Cezar, Copley, 44321 (US); TAYLOR, Andrew, Hudson, 44236 (US)
(74) Representative: Dehns

(57) **Abstract**

An ice protection system adapted to protect at least one ice-susceptible flight surface of an aircraft includes a mechanical ice protection device (10) attached to the flight surface. A controller (41) controls a power source (30) that causes the mechanical ice protection device (10) to change in shape and, thereby, change an aerodynamic characteristic of the flight surface. This change in shape happens only when the current thickness of ice on the surface exceeds a minimum thickness.

## Description

### BACKGROUND

Exemplary embodiments pertain to the art of deicing of components of aerodynamic systems and more specifically to an ice protection system for skins of engine lips, control surfaces such as wing and horizontal stabilizers as well as induction systems, powerplant and blades.

Accumulation of ice on aircraft wings and other aircraft structures during flight is a known issue. A variety of techniques have been used to remove ice from aircraft during flight including chemical deicing (applying chemicals to aircraft structures to reduce ice adhesion forces or reduce the freezing point of water that collects on the aircraft), thermal deicing (actively heating aircraft structures to prevent ice formation or loosen accumulated ice), and pneumatic/mechanical deicing (using inflatable elements to expand the profile of an aircraft structure to crack accumulated ice).

Some state-of-the-art pneumatic deicers (sometimes called deicer boots) employ a neoprene or polyester urethane outer layer positioned over a natural rubber inner layer, which is connected to an aircraft flight surface. Inflation tubes are positioned between the inner layer and the aircraft structure. The inflation tubes inflate causing portions of the outer and inner layers to move away from the aircraft first surface. This movement deforms the outer layer so that ice that has accumulated on the outer layer cracks and is shed from the outer layer. Such a system shall fall into the category of "mechanical" deicers in that they apply a mechanical force to the ice to break it.

There are other types of deicers that use mechanical force as well to remove ice such as electromechanical, vibration and smart / polymer material

### BRIEF DESCRIPTION

Disclosed is an ice protection system for an aerodynamic surface of an aircraft. The system includes a mechanical ice protection device attached to the flight surface and an onboard power source that supplies energy to the mechanical ice protection such that when power supplied the mechanical ice protection device changes an in shape and thereby changes aerodynamics of the flight surface. The system also includes an ice detector which provides an ice-condition input, wherein the ice condition input includes an ice signal and icing parameters for obtaining the current thickness of ice on the flight surfaces. In addition, the system includes an optimizer that uses the current thickness of ice on the flight surface and a minimum ice thickness needed for optimal operation of the mechanical ice protection device, wherein the minimum ice thickness needed for optimal operation of the mechanical ice protection device is a property of the mechanical ice protection device and a controller which controls the power source. The optimizer sends instructions to the power supply to cause it to operate the mechanical ice protection device and thereby vary an aerodynamic characteristic of the flight surface only when the current thickness of ice on the surface exceeds the minimum thickness.

In addition to one or more of the features described above, or as an alternative to any of the foregoing embodiments, the current ice thickness can be measured by a sensor.

In addition to one or more of the features described above, or as an alternative to any of the foregoing embodiments, the current ice condition can be calculated via an optical ice detector or a probe ice detector.

In addition to one or more of the features described above, or as an alternative to any of the foregoing embodiments, the mechanical ice protection device removes ice by causing a change in the shape of the mechanical ice protection device.

In addition to one or more of the features described above, or as an alternative to any of the foregoing embodiments, the mechanical ice protection device is one of include an electromechanical, pneumatic deicer, vibration, induced stress, or acoustic mechanism.

In addition to one or more of the features described above, or as an alternative to any of the foregoing embodiments, the mechanical ice protection device is arranged on a wing of an aircraft and the mechanical ice protection device changes the aerodynamic characteristic of the wing during operation.

In addition to one or more of the features described above, or as an alternative to any of the foregoing embodiments, the mechanical ice protection device is arranged on one of a vertical fin, a horizontal stabilizer, a winglet or an engine inlet as well as engine induction system and the mechanical ice protection device changes the aerodynamic characteristic thereof during operation.

In addition to one or more of the features described above, or as an alternative to any of the foregoing embodiments, the ice detector is one of: an optical ice detector which analyzes circularly polarized light scattered from airborne cloud particles, a probe, a magnetoresistive detector, a vibration detector and a capacitive detector.

In addition to one or more of the features described above, or as an alternative to any of the foregoing embodiments, the minimum thickness is received from a supplier of the mechanical ice protection device.

In addition to one or more of the features described above, or as an alternative to any of the foregoing embodiments, the minimum thickness is determined by testing of the mechanical ice protection device.

In addition to one or more of the features described above, or as an alternative to any of the foregoing embodiments, the mechanical ice protection device is an inflatable boot.

Also disclosed is a method of deicing an aircraft flight surface. The method includes: attaching a mechanical ice protection device to an aircraft flight surfaces; determining a thickness of ice on the flight surface with an ice detector; providing icing parameter to determine the thickness of ice on the flight surface to an optimizer; determining that thickness of ice on the flight surface is greater than a minimum ice thickness needed for optimal operation of the mechanical ice protection device, wherein the minimum ice thickness needed for optimal operation of the mechanical ice protection device is a property of the mechanical ice protection device; and instructing an onboard power source to supply mechanical energy to the mechanical ice protection so that it changes an in shape and thereby changes aerodynamics of the flight surface only when the thickness of ice on the flight surface is greater than a minimum ice thickness needed for optimal operation of the mechanical ice protection device.

In addition to one or more of the features described above, or as an alternative to any of the foregoing embodiments, further comprising: receiving the minimum ice thickness needed for optimal operation of the mechanical ice protection device from a maker of the mechanical ice protection device.

In addition to one or more of the features described above, or as an alternative to any of the foregoing embodiments, further comprising: determining the minimum ice thickness needed for optimal operation of the mechanical ice protection device by experimentation.

In addition to one or more of the features described above, or as an alternative to any of the foregoing embodiments, the mechanical ice protection device is an inflatable boot.

In addition to one or more of the features described above, or as an alternative to any of the foregoing embodiments, the current ice thickness is measured or calculated based on the ice-condition input.

In addition to one or more of the features described above, or as an alternative to any of the foregoing embodiments, the mechanical ice protection device removes ice by cause a change in the shape of the mechanical ice protection device.

In addition to one or more of the features described above, or as an alternative to any of the foregoing embodiments, the mechanical ice protection device is one of: an optical ice detector which analyzes circularly polarized light scattered from airborne cloud particles, a probe, a magnetoresistive detector, a vibration detector and a capacitive detector.

In certain cases, the minimum ice thickness for mechanical system optimal performance varies from a few millimeters to ¼" to ½" for a pneumatic deice

### BRIEF DESCRIPTION OF THE DRAWINGS

The following descriptions should not be considered limiting in any way. With reference to the accompanying drawings, like elements are numbered alike:
FIG. 1 is a partial view of aircraft including a mechanical deicer in the form of a mechanical deicer in the form of a deicing boot; and
FIG. 2 shows a deicing system with an optimizer according to one example of an embodiment of a deicing system.

### DETAILED DESCRIPTION

A detailed description of one or more embodiments of the disclosed apparatus and method are presented herein by way of exemplification and not limitation with reference to the Figures.

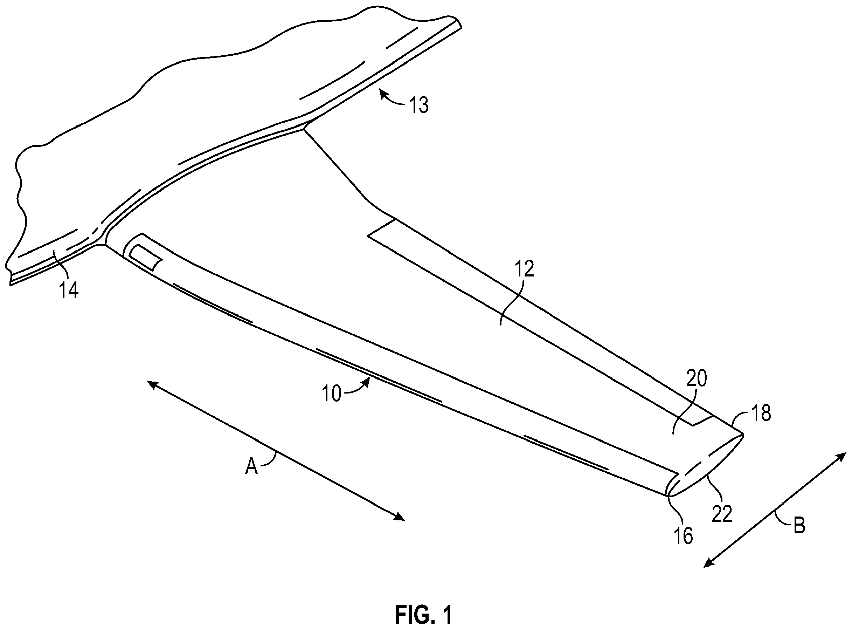

As shown in FIG.1, a mechanical deicer in the form of a deicer boot or pad 10 is mounted on the leading edge of a wing 12 of an aircraft 13, only partial shown. The wing 12 is attached to the fuselage 14 of the aircraft 13. Although the invention is described with respect to a wing 12, it is equally applicable to a tail section or an engine air intake or an airfoil of an aircraft. Any of these portions of an aircraft can generally be referred to as a flight or aerodynamic surface herein.

The wing 12 can extend in a span wise direction away from the fuselage 14 as generally indicated by arrow A. The wing 12 extends from a leading edge 16 to a trailing edge 18 in a chord wise direction generally shown by arrow B. The boot 10 is typically attached to a leading edge 16 and extends along a portion of the wing 12 from the leading edge 10 toward the trailing edge 18 along one or both of the upper 20 and lower 22 surfaces of the wing 12or any other surface to be protected against ice.

The inflation tubes typically require bleed air from the aircraft engine to inflate the boot. Apart from engine performance impact, such systems can require a complex control valve mechanism to bring the air as usable source. Further, each time the boot is inflated, it can result in wear and limit the useful life thereof.

While a boot 10 is shown in FIG. 1, it shall be understood that the teachings herein are applicable to other types of mechanical deicing devices. In such other types of types of devices (as in the inflation tubes) each time the device is used it requires the application of a force and, thus, results in both energy usage and in wear to the system.

Herein, the mechanical devices can include any type of deicing device that when "activated" changes shape. Examples include pneumatic thermal devices, electro-impulse systems, pneumatic boots, etc. As such devices on placed on flight surfaces of the aircraft, as the devices change shape, they will change the shape of the flight surface and, possibly, affect flight characteristics of the aircraft. Thus, if may be beneficial to limit their use not only to reduce energy and wear but also to reduce effects on the flight of the aircraft.

It has been discovered that mechanical deicers work more effectively when the thickness of accumulated ice has exceeded a minimum value. Thus, operating the mechanical deicer when below that level may not only increase wear/energy usage/changes in flight, it may not effectively remove ice. Thus, herein described is system that does not activate the mechanical deicers and therefore chance the aerodynamics of an aircraft flight surface until the thickness of accumulated ice on the flight surface exceeds the minimum value. The minimum thickness value (Tₘᵢₙ) can be determined by testing or be a value that is provided with the deicer.

Some prior systems have considered ice thickness when operating deicers but that has been in context of thermal deicers and the ice thickness was used to vary a mode of the deicer, not whether the deicers was turned on.

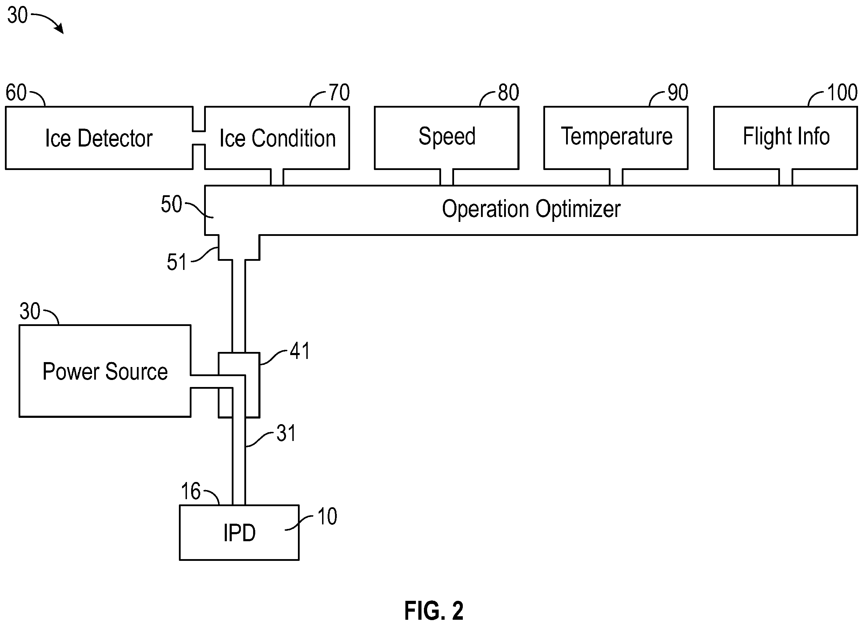

Referring to Figure 2, the ice protection system 30 is adapted to protect an ice-susceptible region such as the leading edge 16 of FIG. 1. The system 30 comprises a mechanical ice protection device 10 associated with the region 16. The ice protection device 10 can receive power (e.g., pressurized air or rotatory/linear motion) from an onboard power source 30 with a supply line 31 to the ice protection device 10. When power is received, the mechanical ice protection device 10 will change in shape and, thus, change the aerodynamics of the flight surface on which it is located.

The system 30 also include a controller 41 which controls the power source 30 and thus its provision of power through the line 31. An optimizer 50 conveys operating instructions 51 to the controller 41, based at least on an ice detector 60 which provides ice-condition inputs 70 thereto. As discussed above, the instructions to operate the mechanical ice protection device 10 will only be provided when the thickness of the ice is above a threshold that is related to the particular mechanical ice protection device 10 being controlled. This can include, for example, holding up a periodic operation of the mechanical ice protection device 10 is the ice in not above the threshold for the mechanical ice protection device 10.

The optimizer 50 can receive additional inputs, such as an airspeed input 80, an ambient temperature input 90, and/or a flight input 100.

Although the optimizer 50 is schematically shown in the drawings as separate entity from the controller 41, this need not be the case. The optimizer 50, the controller 41, and other system components can be incorporated into or share installations. The optimizer 50, for example, can be an algorithm contained within a microprocessor integrated with controllers.

The controller 41 can be configured to simply turn the ice protection device 10 on and off. In this case, operational optimization can be achieved by avoiding the activation of ice protection when the ice thickness is below the threshold related to the mechanical ice protection device 10. Further, it should be noted that

The optimizer 50 can comprise a processor programmed minimum thickness for the mechanical ice protection device 10. In addition to the data dynamically input during operation of the ice protection system 30, the optimizer 50 can take into consideration non-changing designs features of the respective regions (e.g. airfoil sharpness, ice collection efficiency, proximity to moving parts, etc.). Also, the optimizer 50 can look at the operation of related ice protection devices as a coordinated scheme.

The ice detector 60 can comprise any suitable detecting technology capable of providing the relevant input 70. For example, the detector 60 can comprise cloud-responsive heating elements (see *e.g*., US20110288776, US5140135, US4980673), vibrating probes which change frequency with ice accretion (see *e.g.,* US7104502, US6759962, US6847903, US4611492), optical mechanisms (see *e.g.,* US8144325, US 6069565), temperature-maintaining resistors (see *e.g*., US8037750), clog-with-ice conduits (see *e.g.*, US7845221), ice-thickness-changes-impedance arrangements of electrodes (see *e.g*., US6759962, US5955887), acoustic channels (see *e.g.,* US5922958) and/or piezoelectric film arrays (see *e.g.,* US5206806).

A suitable candidate for the ice detector 60 could be an optical ice detector (OID) which analyzes circularly polarized light scattered from airborne cloud particles. Such a detector could include a laser apparatus configured to direct a light signal into a cloud, a lens component configured to collect echo signals from a cloud caused by the light signal directed into the cloud, a beam splitter component configured to redirect signals received and passing through the lens component into at least first and second paths and a droplet detector to receive the redirected signals. The droplet detector could include a first signal detector component configured to perform a first color measurement on the first redirected signal, and a second signal detector component configured to perform a second color measurement on the second redirected signal. The droplet detector is configured to use the first and second color measurements to determine liquid water content and droplet diameter distribution for the cloud. (See *e.g.,* US 8338785.)

The ice detector 60 detects a non-temperature parameter such as liquid water content (LWC), ice water content (IWC), total water content (TWC), mean drop size, median volumetric drop (MDV), and/or ice thickness (THICK). The significant non-temperature parameter is detected, not estimated, predicted, or otherwise calculated solely from temperature data. Temperature data may be used, however, in conjunction with this parameter to produce the input 70. The ice detector 60 can be one of an optical ice detector which analyzes circularly polarized light scattered from airborne cloud particles, a probe, a magnetoresistive detector, a vibration detector and a capacitive detector.

The speed input 80 is a non-temperature input which correlates to the impingement speed encountered by droplets on route to the aircraft surface. This input 80, however, need not be a precise measurement of the airspeed, but can be or use other related velocities such as aircraft speed.

The temperature input 90 is an input corresponding to ambient temperature conditions, not the temperature of the ice protection device or associated region. In fact, one advantage of the ice protection system 10 is that it can eliminate the need for surface temperature devices, and thus the corresponding wiring.

The input 100 comprises a non-temperature flight information relating to overall flight. This input 100 can comprise, for example, aircraft altitude (ALT), aircraft speed (SPEED), angle of attack (AOA), flight phase (PHASE), weight on wheels (WOW), and/or the position of movable parts (PART).

One may now appreciate the ice protection system 30 uses ice-detection data to optimize operation based on characteristics of the particular, mechanical ice protection device 10 being used and, in particular, to a minimum ice thickness needed for optimal operation of the mechanical ice protection device 10. The minimum ice thickness needed for optimal operation of the mechanical ice protection device is a property of the mechanical ice protection device and, as discussed above, can be provided by the maker of the device or determined by experimentation.

As an example, the system 30 could be configured to periodically operate the mechanical ice protection device 10 when the temperature is below a certain level and there are water droplets present. The optimizer 50 can receive the ice thickness (THICK). from the ice detector 60 and delay sending a signal on the periodic time until ice thickness (THICK) exceeds the thickness needed for optimal operation of the mechanical ice protection device 10. In another example, the mechanical ice protection device 10 could be operated "on-demand" each time the ice thickness (THICK) exceeds the minimum ice thickness needed for optimal operation of the mechanical ice protection device 10. In yet another example, while some or all other inputs received by the optimizer 50 are indicating that that the ice protection system should be operated, the optimizer 50 will delay operation mechanical of the ice protection device 10 until the minimum ice thickness needed for optimal operation of the mechanical ice protection device 10 is exceeded. In all of the above examples (and in others), when the mechanical ice protection device 10 is operated it will change the aerodynamic characteristics of the flight surface where it is located.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not to be limited to the particular embodiment disclosed as the best mode contemplated for carrying out this present disclosure, but that the present disclosure will include all embodiments falling within the scope of the claims.

## Claims

1. An ice protection system adapted to protect at least one ice-susceptible flight surface of an aircraft, said system comprising:
a mechanical ice protection device (10) attached to the flight surface;
an onboard power source (30) that supplies energy to the mechanical ice protection device (10) such that when power supplied the mechanical ice protection device (10) changes an in shape and thereby changes aerodynamics of the flight surface;
an ice detector (60) which provides an ice-condition input, wherein the ice condition input includes an ice signal and icing parameters for obtaining the current thickness of ice on the flight surfaces;
an optimizer (50) that uses the current thickness of ice on the flight surface and a minimum ice thickness needed for optimal operation of the mechanical ice protection device (10), wherein the minimum ice thickness needed for optimal operation of the mechanical ice protection device (10) is a property of the mechanical ice protection device (10); and
a controller (41) which controls the power source (30);
wherein the optimizer (50) sends instructions to the power supply to cause it to operate the mechanical ice protection device (10) and thereby vary an aerodynamic characteristic of the flight surface only when the current thickness of ice on the surface exceeds the minimum thickness.

2. The system of claim 1, wherein the current ice thickness is measured by a sensor, or wherein the current ice condition is calculated via an optical ice detector (60) or a probe ice detector (60).

3. The system of any preceding claim, wherein the mechanical ice protection device (10) removes ice by causing a change in the shape of the mechanical ice protection device (10), and optionally wherein the mechanical ice protection device (10) is one of include an electromechanical, pneumatic deicer, vibration, induced stress, or acoustic mechanism.

4. The system of any preceding claim, wherein the mechanical ice protection device (10) is arranged on a wing of an aircraft and the mechanical ice protection device (10) changes the aerodynamic characteristic of the wing during operation.

5. The system of any preceding claim, wherein the mechanical ice protection device (10) is arranged on one of a vertical fin, a horizontal stabilizer, a winglet or an engine inlet as well as engine induction system and the mechanical ice protection device (10) changes the aerodynamic characteristic thereof during operation.

6. The system of any preceding claim, wherein the ice detector (60) is one of: an optical ice detector (60) which analyzes circularly polarized light scattered from airborne cloud particles, a probe, a magnetoresistive detector, a vibration detector and a capacitive detector.

7. The system of any preceding claim, wherein the minimum thickness is received from a supplier of the mechanical ice protection device (10), or, wherein the minimum thickness is determined by testing of the mechanical ice protection device (10).

8. The system of any preceding claim, the mechanical ice protection device (10) is an inflatable boot.

9. A method of deicing an aircraft flight surface comprising:
attaching a mechanical ice protection device (10) to an aircraft flight surfaces;
determining a thickness of ice on the flight surface with an ice detector (60);
providing icing parameter to determine the thickness of ice on the flight surface to an optimizer (50);
determining that thickness of ice on the flight surface is greater than a minimum ice thickness needed for optimal operation of the mechanical ice protection device (10), wherein the minimum ice thickness needed for optimal operation of the mechanical ice protection device (10) is a property of the mechanical ice protection device (10); and
instructing an onboard power source (30) to supply mechanical energy to the mechanical ice protection so that it changes an in shape and thereby changes aerodynamics of the flight surface only when the thickness of ice on the flight surface is greater than a minimum ice thickness needed for optimal operation of the mechanical ice protection device (10).

10. The method of claim 9, further comprising:
receiving the minimum ice thickness needed for optimal operation of the mechanical ice protection device (10) from a maker of the mechanical ice protection device (10).

11. The method of any of claims 9 or 10, further comprising:
determining the minimum ice thickness needed for optimal operation of the mechanical ice protection device (10) by experimentation.

12. The method of any of claims 9 to 11, wherein the mechanical ice protection device (10) is an inflatable boot.

13. The method of any of claims 9 to 12, wherein the current ice thickness is measured or calculated based on the ice-condition input.

14. The method of any of claims 9 to 13, wherein the mechanical ice protection device (10) removes ice by cause a change in the shape of the mechanical ice protection device (10).

15. The system of any of claims 9 to 14 wherein the mechanical ice protection device (10) is one of: an optical ice detector (60) which analyzes circularly polarized light scattered from airborne cloud particles, a probe, a magnetoresistive detector, a vibration detector and a capacitive detector.
